(19) Europäisches Patentamt / European Patent Office / Office européen des brevets

(11) EP 4 105 819 B1

(12) **EUROPEAN PATENT SPECIFICATION**

(45) Date of publication and mention of the grant of the patent:
**13.05.2026 Bulletin 2026/20**

(21) Application number: **21741761.7**

(22) Date of filing: **13.01.2021**

(51) International Patent Classification (IPC):
***G06T 7/20*** *(2017.01)* ***G06N 3/0464*** *(2023.01)*
***G06N 3/09*** *(2023.01)* ***G06V 20/52*** *(2022.01)*

(52) Cooperative Patent Classification (CPC):
**G06V 20/52; G06N 3/0464; G06N 3/09; G06T 7/20;**
G06T 2207/10016; G06T 2207/20084;
G06T 2207/30221

(86) International application number:
**PCT/CN2021/071435**

(87) International publication number:
**WO 2021/143716 (22.07.2021 Gazette 2021/29)**

(54) **DEEP LEARNING-BASED HORSE SPEED CALCULATION SYSTEM AND METHOD THEREOF**

AUF TIEFENLERNEN BASIERENDES PFERDEGESCHWINDIGKEITSBERECHNUNGSSYSTEM UND VERFAHREN DAFÜR

SYSTÈME DE CALCUL DE VITESSE DE CHEVAL BASÉ SUR UN APPRENTISSAGE PROFOND ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2020 CN 202010030062**

(43) Date of publication of application:
**21.12.2022 Bulletin 2022/51**

(73) Proprietor: **Target Information Company Limited**
**Nt, Hong Kong (HK)**

(72) Inventor: **KWAN, Kwok Leung**
**New Territories, Hong Kong (HK)**

(74) Representative: **Isern Patentes y Marcas S.L.**
**Avda. Diagonal, 463 Bis, 2°**
**08036 Barcelona (ES)**

(56) References cited:
**CN-A- 108 592 992**
**CN-A- 109 030 854**
**CN-A- 111 274 914**
**US-A1- 2019 154 442**

- **LIU KAIZHAN ET AL: "A Real-Time Method to Estimate Speed of Object Based on Object Detection and Optical Flow Calculation", vol. 1004, 1 April 2018 (2018-04-01), pages 12003 - 1, XP009553088, ISSN: 1742-6588, Retrieved from the Internet <URL:http://stacks.iop.org/1742-6596/1004/i=1/a=012003?key=crossref.27350f650d82527bdb464f6718d54a2f> [retrieved on 20180425], DOI: 10.1088/1742-6596/1004/1/012003**
- **CUI LINYAN ET AL: "SOF-SLAM: A Semantic Visual SLAM for Dynamic Environments", IEEE ACCESS, vol. 7, 7 November 2019 (2019-11-07), pages 166528 - 166539, XP011753036, DOI: 10.1109/ACCESS.2019.2952161**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 105 819 B1

## Description

### Technical Field

The invention relates to the technical field of deep learning, in particular to a horse speed calculation system and method based on deep learning.

### Technical Background

Equestrian is a sport that integrates exercise, fitness and leisure, and is loved by increasingly more people in recent years. Speed horse racing based on equestrian has developed into a competition event, which uses speed and riding skills to win and challenges the overall level of a rider. At present, in predicting the competition ranking of horses, it is generally based on naked eyes to observe the state of the horses (including fatigue level, sweating amount and movement) to make predictions. There is also a lack of more accurate scientific and intelligent means.

LIU KAIZHEN et al "A Real-Time Method to Estimate Speed of Object Based on Object Detection and Optical Flow Calculation" (ISSN:1742-6588) introduces a method to real-time estimate speed of object by combining two CNN: YOLOv2 and FlowNet. In every frame, YOLOv2 provides object size; object location and object type while FlowNet providing the optical flow of whole image. On one hand, object size and object location help to select out the object part of optical flow image thus calculating out the average optical flow of every object. On the other hand, object type and object size help to figure out the relationship between optical flow and true speed by means of optics theory and priori knowledge. Therefore, with these two key information, speed of object can be estimated. This method manages to estimate multiple objects at real-time speed by only using a normal camera even in moving status, whose error is acceptable in most application fields like manless driving or robot vision.

### Summary of the Invention

In view of the shortcomings of the prior art, the present invention aims to provide a horse speed calculation system and method based on deep learning, which realizes the use of artificial intelligence technology to observe horses and calculate horse speeds in a more scientific way.

In order to achieve the above objectives, the present invention adopts the following technical solutions:
A method for a horse speed calculation system based on deep learning, comprising the following steps:

S1. before a start of a competition, horses participating in the competition walk around a competition field, a camera shoots a video of a target horse walking around the competition field and sends the video to an optical flow field calculation module; during a video shooting, the camera rotates to maintain the target horse within a shooting range;

S2. performing an image extraction from the video obtained by the camera and calculating an optical flow field between consecutive images:
the optical flow field calculation module decodes the video, input from the camera, into single frames, and extracts an image every set number of frames N, that is, two consecutive images are separated by N frames, and calculates the optical flow field between two consecutive images;

S3. performing an object artificial intelligence detection on the video:
an object artificial intelligence detection module detects objects that appear in the video, and saves a position and a size of each of the detected objects, comprising a position and a size of the target horse; a position of an object is a position of its center point, and a size comprises a length and a width;

S4. an optical flow field filtering module filters out all moving objects from the optical flow field obtained in step S2 according to the objects detected in step S3, such that a maximum component of the optical flow field is the camera speed in pixels every N frames;

S5. a camera speed calculation module calculates a direction and a speed of the camera according to the filtered optical flow field in step S4;

S6. calculating a speed of the target horse between two consecutive images:

according to the position of the target horse detected by the object artificial intelligence detection module, a displacement of the target horse between two consecutive images is calculated by subtracting a position of a previous image from a position of the target horse in a current image, a unit of the displacement is pixel/N frames; accordingly, a target horse speed calculation module calculates a final camera speed in pixels/N frames, that is, a speed $H_p$ of the target horse is:

$$H_p = \omega - (\dot{d} - d);$$

$\omega$ is an angular velocity of the camera, unit is pixel/N frames, $\dot{d}$ is a position of a center of the target horse in the previous image, and d is a position of a center of the target horse in the current image;

S7. an output module averages all speeds of the target horse between two consecutive images obtained by calculation to obtain an average speed of the target horse.

Further, in step S2, the number of frames is set to 5 frames.

Further, in step S2, a method using Farneback is used to calculate the optical flow field.

Further, in step S3, the object artificial intelligence detection module uses a YOLOv3 network to implement an artificial intelligence detection of the objects.

Further, in step S6, a unit conversion is performed on $H_p$ to obtain the target horse speed in unit of horse length/second;

first, calculating the target horse speed $\dot{H}_p$ in unit of pixel per second through $H_p$:

$$\dot{H}_p = H_p * fps * \mathrm{N};$$

*fps* is a number of frames per second of the video;

then, converting pixels to a horse length, and calculating the target horse speed $V_t$ in the unit of horse length/second;

$$V_t = \dot{H}_p / Pixels;$$

$\dot{H}_p$ is the speed of the target horse in unit of pixels per second; *Pixels* is the number of pixels of the horse length, unit is pixel/horse length.

Even further, for a length of the target horse detected by the object artificial intelligence detection module, using an abnormal state detection method RANSAC to review the detected horse length; assuming that the target horse walks normally within a short period of time after the start of the video, as new data points appear, a new regression model is updated based on this set of sampled data; checking the new data points against the new regression model, and against high-quality data points of an existing regression model, any abnormal data values will be removed and replaced with a known effective length.

The present invention further provides a horse speed calculation system based on deep learning, comprising:

a camera: the camera is provided in a competition field, and is used to shoot a video of a target horse walking around the competition field before a competition; during a shooting process, the camera rotates to keep the target horse in a shooting range;

an optical flow field calculation module: used to extract images from the video obtained by the camera and calculate an optical flow field between consecutive images;

an object artificial intelligence detection module: used to use an artificial intelligence to detect and save a position and a size of an object in the video;

an optical flow field filter module: used to filter the optical flow field calculated by the optical flow field calculation module according to a detection result of the object artificial intelligence detection module to filter out all moving objects, such that a maximum component of the optical flow field is the camera speed in pixels every N frames;

a camera speed calculation module: used to calculate a direction and a speed of the camera using the optical flow field filtered by the optical flow field filter module;

a target horse speed calculation module: used to calculate, according to the position of the target horse detected by the object artificial intelligence detection module, a displacement of the target horse between two consecutive images by subtracting a position of a previous image from a position of the target horse in a current image, and use the displacement of the horse to adjust the speed of the camera between two consecutive images calculated by the camera speed calculation module to obtain a speed $H_p$ of the target horse, an adjustment formula is $H_p = \omega - (\dot{d} - d)$, $\omega$ is an angular velocity of the camera, unit is pixel/N frames, $\dot{d}$ is a position of a center of the target horse in the previous image, and $d$ is a position of a center of the target horse in the current image;

an output module is used to average all speeds of the target horse between two consecutive images to obtain and output an average speed of the target horse.

The beneficial effect of the present invention is: the present invention realizes the use of artificial intelligence technology to observe horses and calculate the speed of the horses in a more scientific way, so that the competition ranking of the horses can be effectively predicted.

**Description of the Figures**

Figure 1 is an illustrative diagram of a network architecture of YOLOv3;

Figure 2 is an illustrative diagram of an influence on the histogram of an optical flow field when optical flow vectors are removed from the moving objects;

Figure 3 is an exemplary diagram showing different examples of horse lengths in different postures;

Figure 4 is an illustrative diagram of test results of an embodiment of the present invention.

**Detailed Description**

The present invention will be further described below in conjunction with the accompanying figures. It should be noted that these embodiments are based on the present technical solution to provide detailed implementation and specific operation procedures, but the scope of protection of the present invention is not limited to these embodiments.

Embodiment 1

This embodiment provides a method for a horse speed calculation system based on deep learning, comprising the following steps:

S1. before a start of a competition, horses participating in the competition walk around a competition field, a camera shoots a video of a target horse walking around the competition field and sends the video to an optical flow field calculation module; during a video shooting, the camera rotates to maintain the target horse within a shooting range;

The video is usually recorded in AVI or MP4 encoding, but real-time RTSP streaming may also be used. The video is 23 to 26 frames per second.

S2. performing an image extraction from the video obtained by the camera and calculating an optical flow field between consecutive images:
The rotation speed $\omega$ of the camera is equal to the radian rate $\phi$ of the camera change divided by time $t$. The linear speed of the target horse (assuming it is in the camera's field of view) is proportional to the factor of the distance between the camera and the target horse. However, since the expected output is expressed by the length of the horse and the camera settings (zoom level, distance, etc.) are not fixed, this embodiment uses pixels per second, that is, using pixel displacement to express the rotation speed of the camera.

In this embodiment, in order to obtain the pixel displacement, the optical flow between every two consecutive images is calculated (Horn and Schunck). In this embodiment, the optical flow field calculation module decodes the video input by the camera into single frames, and extracts an image every 5 frames, that is, there are 5 frames apart between two consecutive images. This is because the horse riding speed is relatively slow, which means that the speed of the camera rotation is also slow, so the overall performance can be improved by skipping frames without affecting accuracy. Optical flow is used to estimate a movement between two related images, such as image speed or displacement of discrete objects (Beauchemin and Barron). Every pixel in the first image has value. Assuming that the time between two images is very short, the pixel values in the second image are:

$$I(x,y,t) = I(x+\Delta x, y+\Delta y, t+\Delta t);$$

$I(x, y, t)$ represents the pixel values of a certain pixel in the second image, $x$ and $y$ represent the coordinate values of the pixel on the x-axis and y-axis respectively, $t$ represents time, $\Delta x$, $\Delta y$ and $\Delta t$ represent value changes of the x-axis coordinate value, the y-axis coordinate value and the time respectively, of a certain pixel of the second image relative to the corresponding pixel on the first image;

The purpose of the optical flow is to find the corresponding pixels between two images and express them as a direction and a length (a direction is expressed as angle, and a length is expressed as the number of pixels). There are several methods of calculating the optical flow field. In this embodiment, the Farneback method is adopted.

Two images can be modelled as:

$$u = \sum_{i=1}^{n} A_i(x,y,t)\phi_i(x,y,t);$$

$$v = \sum_{i=1}^{n} A_i(x,y,t)\eta_i(x,y,t);$$

Here, $\phi_i(x, y, t)$ and $\eta_i(x, y, t)$, $i$=1,2,...,$n$ are the basis functions of the $n$ process models of the two images, and $A_i$ are the coefficients of the spatial and temporal changes of each process model.

Assuming $E_D(u,v)$ is a measurement deviation, $E_S(u, v)$ is a smoothing term, and $\alpha$ is a smoothing weighting factor, the optical flow field of the two images is the sum of the data and the minimum of the weighted smoothing term is:

$$E(u,v) = \min(E_D(u,v) + \alpha E_S(u,v));$$

$E(u, v)$ represents the optical flow field of two images.

S3. performing an object artificial intelligence detection on the video:
Since the obtained optical flow field contains various noises, the noise caused by the movement of other objects (mainly people and horses) must be removed.

The object artificial intelligence detection module is used to detect objects that appear in the video, and save a position and a size of each detected object, comprising the position and the size of the target horse; wherein the detected position will be used to filter the optical flow vector of related objects. The position and size of the target horse are also saved as the target displacement for compensation and calculation of the horse length.

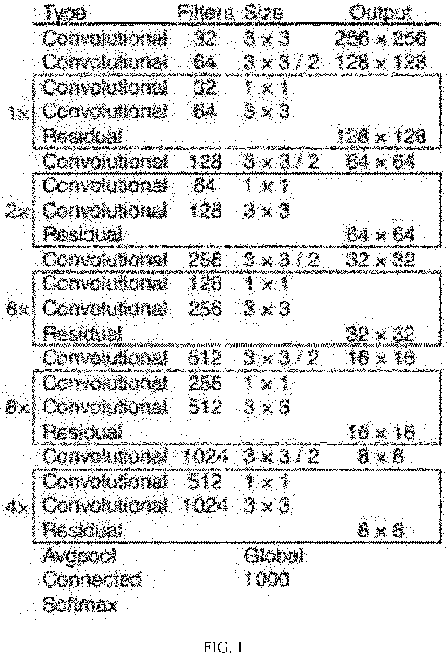

In this embodiment, the object detection artificial intelligence is derived from YOLOv3, and YOLOv3 is derived from the Dark-net developed by Redmon and Farhadi. Like other object detection models, YOLOv3 is a fully convolutional neural network (CNN) that applies residual layers and skip connection techniques, allowing layers from different depths to help inferring results. The network consists of 53 convolutional layers and the last fully connected layer for inference. Figure 1 shows the network layout of YOLOv3.

Compared with other traditional object detection artificial intelligence, the advantage of YOLOv3 is that only one inference is required, which is much faster than other multidimensional/multi-pass models.

The input image is entered into 13×13 grids, and each grid predicts up to 5 objects. For each bounding box, the network will predict 5 coordinates $t_x, t_y, t_w, t_h, t_o$ where $t_x$ , $t_y$ are the x-axis coordinate and y-axis coordinate of the center point of the bounding box respectively, $t_w$ , $t_h$ are the width and height of the bounding box respectively, and $t_o$ is the confidence degree of the bounding box; therefore, the width and the height of the boundary frame of each grid in column x and row y with coordinate $(c_x,c_y)$ is $p_w, p_h$ , and the prediction of the boundary frame of an object is:

$$b_x = \alpha(t_x) + c_x;$$

$$b_y = \alpha(t_y) + c_y;$$

$$b_w = p_w e^{t_w};$$

$$b_h = p_h e^{t_h};$$

$$\Pr(object) * IOU(b, object) = \alpha(t_o);$$

wherein $\alpha()$ is a logical activation function or normalization function to have the result value ε [0, 1]. Pr(*object*) is the probability of an object, and *IOU*(*b, object*) is the accuracy of the boundary frame. In addition to these coordinates, each prediction will also have a type associated with it. The YOLOv3 network used in this embodiment has undergone fine-tuning training on humans and horses. The training is completed by performing transfer learning on the last fully connected layer, so that the network can detect humans and horses more accurately.

The prediction of each frame will provide the position (center point) and size (length and width) of each object. This information will be used in the following sections to reduce the noise from the optical flow field and to calculate the displacement and size of the target horse.

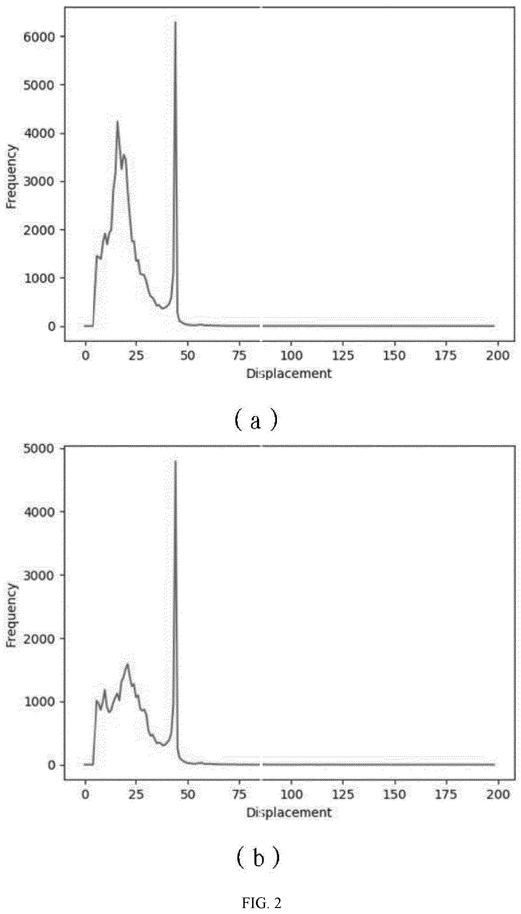

S4. an optical flow field filtering module filters out all moving objects from the optical flow field obtained in step S2 (to zero) according to the objects detected in step S3. At this time, the maximum component of the optical flow field will be the camera speed in pixels every 5 frames. Figure 2 shows the effect on the optical flow field histogram when the optical flow vector is removed from the moving objects, where Figure 2(a) is the amplitude histogram before filtering, and Figure 2(b) is the amplitude histogram after filtering.

S5. a camera speed calculation module calculates a direction and a speed of the camera according to the filtered optical flow field in step S4:

Each optical flow vector is formed by two parts: direction (angle) and speed (pixel):

1. Direction: the camera direction value $\omega_\phi$ is equal to the maximum component of the optical flow field direction histogram.

2. Speed: the camera speed value $\omega_m$ is equal to the maximum component of the optical flow field speed histogram (the opposite direction has been removed).

$$\omega_\phi = \max(D_H);$$

$$\omega_m = \max(F_{\omega_\phi}(M_H));$$

wherein $\omega_\phi$ and $\omega_m$ is the direction and speed (displacement) of the camera, and $D_H$ is the optical flow field direction histogram, $M_H$ is the optical flow field speed histogram, and $F_{\omega\phi}$ is a vector filter for direction.

S6. calculating a speed of the target horse between two consecutive images:

Since the speed of the target horse may change, and the camera is unlikely to keep the target in the center of the field of view, this deviation will affect the result. In order to reduce this effect, the calculated camera speed may be adjusted by the displacement of the target horse, and this adjustment is based on the displacement of the target horse in the current image relative to the previous image (that is, 5 frames before), and the unit is pixel/ 5 frames.

In particular, in step S3, the object artificial intelligence detection module detects the position and size of each object (human and horse), comprising the position and size of the target horse. The displacement of the target horse (in pixels/5 frames) is calculated by subtracting the previous position from the current position of the target horse. According to this, the target horse speed calculation module calculates the final camera speed in pixels, that is, the speed of the target horse is:

$$H_p = \omega - (\dot{d} - d);$$

$\omega$ is the angular velocity of the camera (in pixels / 5 frames), $\dot{d}$ is the previous position of the center of the target horse, and $d$ is the current position of the center of the target horse. Since the desired result is in the unit of horse length per second, $H_p$ is required to be converted. First, the time unit will be converted from 5 frames to 1 second. *fps* is the number of frames per second of the video, and the target horse speed $\dot{H}_p$ in the unit of pixels per second is:

$$\dot{H}_p = H_p * fps * 5;$$

Then, the target horse speed in the unit of pixels per second is converted into the target horse speed in the unit of horse length per second.

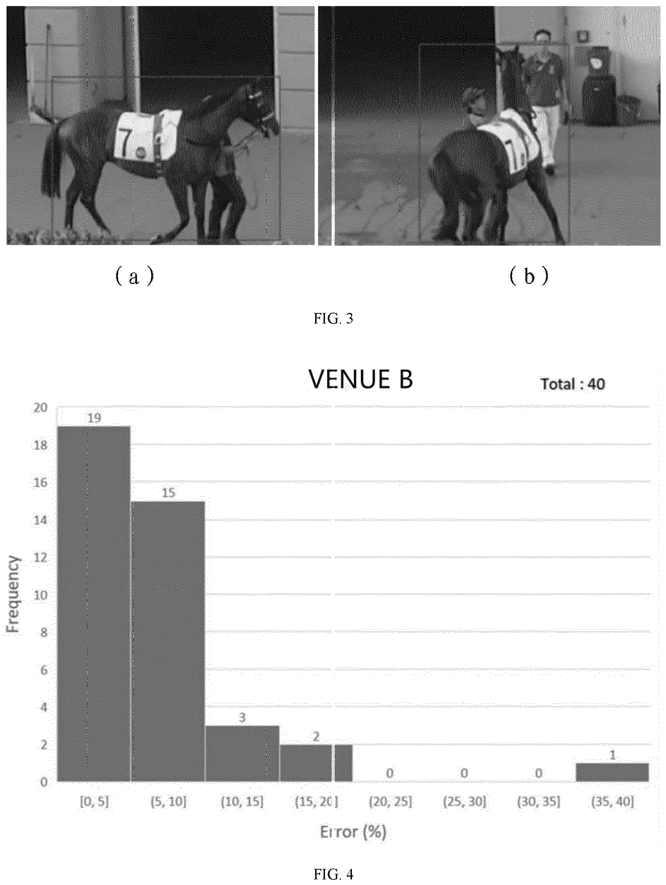

In step S2.2, the object artificial intelligence detection module detects the position and size of the target horse. But unlike the position, the size of the target horse depends on its posture, and the accuracy of the horse length also depends largely on its posture. Figure 3 (a) and (b) show different horse postures, and the difference in the length of the two horses is clearly observed. In the case that the object artificial intelligence detection module may not be able to detect the target, the previously known horse length will be used.

In order to reduce this situation, this embodiment adopts the abnormal state detection method RANSAC to review the length of the detected horses. Assuming that the target horse walks normally within a short time after the start of the video, as new data points appear, a new regression model will be updated based on this set of sampled data. New data points are checked against the new regression model, and against high-quality data points of the existing regression model, any abnormal data values will be removed and replaced with known effective lengths. Pixels are converted to a horse length, and the target horse speed $V_t$ is calculated in the unit of horse length/second;

$$V_t = \dot{H}_p / Pixels;$$

$\dot{H}_p$ is the speed of the target horse in unit of pixels per second; *Pixels* is the number of pixels of the horse length, unit is pixel/horse length;

S7. The output module averages all the calculated target horse speeds between two consecutive images to obtain the average speed of the target horse. The average speed is expressed in terms of horse length per second. The final result may be displayed on real-time video or output to a file.

According to the average speed of each horse obtained by the prediction, the ranking of the competition can be effectively predicted.

The performance of the method in this embodiment will be further explained through testing.

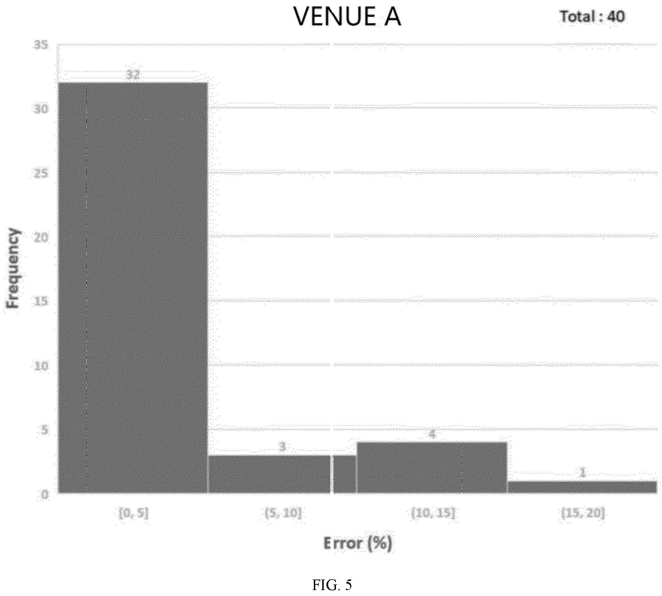

There are more than 3000 sample videos in this test. 40 video clips from venue A and 40 video clips from venue B are randomly sampled from more than 3000 video clips. The duration of each video is between 30 to 45 seconds. Figure 4 shows the test results on venue B. Figure 5 shows the test results on venue A. The x-axis represents the interval with an error rate of 5%, and the y-axis represents the number of results within the error rate. The error rate is the difference between the estimated result and the actual result divided by the absolute value of the actual result:

$$\varepsilon = \left| (R_T - R_p) / R_T \right| * 100;$$

$\varepsilon$ is the error (percentage), $R_T$ is the actual result (horse length/second), $R_T$ is the predicted result obtained by the method of this embodiment.

The actual speed value observed manually can be estimated by measuring the time between two points in the video of a known distance. In addition, the horse length uses the average length of a race horse (2.4m), not the actual length of the target horse. The actual speed is calculated as follows:

$$V_t = (D / T) / L.$$

$V_t$ = actual speed (horse body/ second)
$D$ = the distance between two known points in the sand circle (m)
$T$ = elapsed time (seconds)
$L$ = the length of the an average racehorse (2.4 m/horse body)

The results showed that more than 86% (69/80) of the test samples fell within 10% of the error. Further, only less than 1.5% (1/80) of the test samples fell outside the 20% error range.

It can be seen that the accuracy of the method in Embodiment 1 is comparable to the expected value. The accuracy rate exceeds 90%, and the recall rate exceeds 86%. In addition, the environment of different competition venues is usually very different (background, number of moving objects/obstacles and viewing distance). Therefore, the method of Embodiment 1 is robust to different sand circle conditions and may adapt to different viewpoints.

Embodiment 2

This embodiment provides a horse speed calculation system based on deep learning, comprising:

a camera: the camera is provided in a competition field, and is used to shoot a video of a target horse walking around the competition field before a competition; during a shooting process, the camera rotates to keep the target horse in a shooting range;

an optical flow field calculation module: used to extract images from the video obtained by the camera and calculate an optical flow field between consecutive images;

an object artificial intelligence detection module: used to use a YOLOv3 network to detect and save the positions and sizes of the objects in the video;

an optical flow field filter module: used to filter the optical flow field calculated by the optical flow field calculation module according to a detection result of the object artificial intelligence detection module to filter out all moving objects;

a camera speed calculation module: used to calculate a direction and a speed of the camera using the optical flow field filtered by the optical flow field filter module;

a target horse speed calculation module: used to calculate, according to the position of the target horse detected by the object artificial intelligence detection module, a displacement of the target horse between two consecutive images by subtracting a position of a previous image from a position of the target horse in a current image. The displacement of the horse is used to compensate the camera speed between two consecutive images calculated by the camera speed calculation module to obtain the speed of the target horse in pixels between the two consecutive images, then unit conversion on the speed of the target horse in pixels is performed.

an output module is used to average all speeds of the target horse between two consecutive images to obtain and output an average speed of the target horse. The unit of the average speed is horse length/-second.

## Claims

**1.** A method for a horse speed calculation system based on deep learning, comprising the following steps:

S1. before a start of a competition, horses participating in the competition walk around a competition field, a camera shoots a video of a target horse walking around the competition field and sends the video to an optical flow field calculation module; during a video shooting, the camera rotates to maintain the target horse within a shooting range;

S2. performing an image extraction from the video obtained by the camera and calculating an optical flow field between consecutive images:
the optical flow field calculation module decodes the video, input from the camera, into single frames, and extracts an image every set number of frames N, that is, two consecutive images are separated by N frames, and calculates the optical flow field between two consecutive images;

S3. performing an object artificial intelligence detection on the video:
an object artificial intelligence detection module detects objects that appear in the video, and saves a position and a size of each of the detected objects, comprising a position and a size of the target horse; a position of an object is a position of its center point, and a size comprises a length and a width;

S4. an optical flow field filtering module filters out all moving objects from the optical flow field obtained in step S2 according to the objects detected in step S3, such that a maximum component of the optical flow field is the camera speed in pixels every N frames;

S5. a camera speed calculation module calculates a direction and a speed of the camera according to the filtered optical flow field in step S4;

S6. calculating a speed of the target horse between two consecutive images:

according to the position of the target horse detected by the object artificial intelligence detection module, a displacement of the target horse between two consecutive images is calculated by subtracting a position of a previous image from a position of the target horse in a current image, a unit of the displacement is pixel/N frames; accordingly, a target horse speed calculation module calculates a final camera speed in pixels/N frames, that is, a speed $H_p$ of the target horse is:

$$H_p = \omega - (\dot{d} - d);$$

$\omega$ is an angular velocity of the camera, unit is pixel/N frames, $\dot{d}$ is a position of a center of the target horse in the previous image, and d is a position of a center of the target horse in the current image;

S7. an output module averages all speeds of the target horse between two consecutive images obtained by calculation to obtain an average speed of the target horse.

2. The method according to claim 1, **characterized in that**, in step S2, the number of frames is set to 5 frames.

3. The method according to claim 1, **characterized in that**, in step S2, a method using Farneback is used to calculate the optical flow field.

4. The method according to claim 1, **characterized in that**, in step S3, the object artificial intelligence detection module uses a YOLOv3 network to implement an artificial intelligence detection of the objects.

5. The method of claim 1, **characterized in that**, in step S6, a unit conversion is performed on $H_p$ to obtain the target horse speed in unit of horse length/second;

   first, calculating the target horse speed $H_p$ in unit of pixel per second through $H_p$:

   $$\dot{H}_p = H_p * fps * \mathrm{N};$$

   *fps* is a number of frames per second of the video;
   then, converting pixels to a horse length, and calculating the target horse speed $V_t$ in the unit of horse length/second;

   $$V_t = \dot{H}_p / Pixels;$$

   $\dot{H}_p$ is the speed of the target horse in unit of pixels per second; *Pixels* is the number of pixels of the horse length, unit is pixel/horse length.

6. The method of claim 5, **characterized in that**, for a length of the target horse detected by the object artificial intelligence detection module, using an abnormal state detection method RANSAC to review the detected horse length; assuming that the target horse walks normally within a short period of time after the start of the video, as new data points appear, a new regression model is updated based on this set of sampled data; checking the new data points against the new regression model, and against high-quality data points of an existing regression model, any abnormal data values will be removed and replaced with a known effective length.

7. A horse speed calculation system based on deep learning, comprising:

   a camera: the camera is provided in a competition field, and is used to shoot a video of a target horse walking around the competition field before a competition; during a shooting process, the camera rotates to keep the target horse in a shooting range;
   an optical flow field calculation module: used to extract images from the video obtained by the camera and calculate an optical flow field between consecutive images;
   an object artificial intelligence detection module: used to use an artificial intelligence to detect and save a position and a size of an object in the video;
   an optical flow field filter module: used to filter the optical flow field calculated by the optical flow field calculation module according to a detection result of the object artificial intelligence detection module to filter out all moving objects, such that a maximum component of the optical flow field is the camera speed in pixels every N frames;
   a camera speed calculation module: used to calculate a direction and a speed of the camera using the optical flow field filtered by the optical flow field filter module;
   a target horse speed calculation module: used to calculate, according to the position of the target horse detected by the object artificial intelligence detection module, a displacement of the target horse between two consecutive images by subtracting a position of a previous image from a position of the target horse in a current image, and use the displacement of the horse to adjust the speed of the camera between two consecutive images calculated by the camera speed calculation module to obtain a speed $H_p$ of the target horse, an adjustment formula is $H_p = \omega - (\dot{d} - d)$, $\omega$ is an angular velocity of the camera, unit is pixel/N frames, $\dot{d}$ is a position of a center of the target horse in the previous image, and $d$ is a position of a center of the target horse in the current image;
   an output module is used to average all speeds of the target horse between two consecutive images to obtain and output an average speed of the target horse.

## Patentansprüche

1. Verfahren für ein auf Tiefenlernen basierendes Pferdegeschwindigkeitsberechnungssystem, umfassend die folgenden Schritte:

   S1. Vor Beginn eines Wettkampfs laufen die am Wettkampf teilnehmenden Pferde auf dem Wettkampfgelände umher; eine Kamera nimmt ein Video eines Zielpferdes auf, das auf dem Wettkampfgelände umherläuft, und sendet das Video an ein Modul zur Berechnung des optischen Flussfeldes; während der Videoaufnahme rotiert die Kamera, um das Zielpferd innerhalb eines Aufnahmebereichs zu halten;

S2. Durchführen einer Bildextraktion aus dem von der Kamera erhaltenen Video und Berechnen eines optischen Flussfeldes zwischen aufeinanderfolgenden Bildern:

Das Modul zur Berechnung des optischen Flussfeldes decodiert das Video, das von der Kamera eingegeben wird, in einzelne Frames und extrahiert ein Bild alle festgelegte Anzahl von Frames N, d. h., zwei aufeinanderfolgende Bilder sind durch N Frames voneinander getrennt, und berechnet das optische Flussfeld zwischen zwei aufeinanderfolgenden Bildern;

S3. Durchführung einer Objekterkennung mit künstlicher Intelligenz im Video:

Ein Modul zur Objekterkennung mit künstlicher Intelligenz erkennt Objekte, die im Video erscheinen, und speichert die Position und Größe jedes der erkannten Objekte, umfassend die Position und Größe des Zielpferdes; eine Position eines Objekts ist die Position seines Mittelpunkts, und die Größe umfasst eine Länge und eine Breite;

S4. Ein Modul zur Filterung des optischen Flussfeldes filtert alle sich bewegenden Objekte aus dem in Schritt S2 erhaltenen optischen Flussfeld gemäß den in Schritt S3 erkannten Objekten heraus, sodass eine maximale Komponente des optischen Flussfeldes die Kamerageschwindigkeit in Pixeln pro N Frames ist;

S5. Ein Kamerageschwindigkeitsberechnungsmodul berechnet eine Richtung und eine Geschwindigkeit der Kamera gemäß dem in Schritt S4 gefilterten optischen Flussfeld;

S6. Berechnen der Geschwindigkeit des Zielpferdes zwischen zwei aufeinanderfolgenden Bildern:

Gemäß der Position des Zielpferdes, die vom Modul zur Objekterkennung mit künstlicher Intelligenz erkannt wurde, wird die Verschiebung des Zielpferdes zwischen zwei aufeinanderfolgenden Bildern berechnet, indem die Position eines vorherigen Bildes von der Position des Zielpferdes im aktuellen Bild subtrahiert wird, wobei die Einheit der Verschiebung Pixel/N Frames ist; dementsprechend berechnet ein Zielpferdgeschwindigkeitsberechnungsmodul eine endgültige Kamerageschwindigkeit in Pixel/N Frames, d. h. die Geschwindigkeit $H_p$ des Zielpferdes beträgt:

$$H_p = \omega - (\dot{d} - d);$$

$\omega$ ist die Winkelgeschwindigkeit der Kamera, die Einheit ist Pixel/N Frames, d ist die Position des Mittelpunkts des Zielpferdes im vorherigen Bild und d ist die Position des Mittelpunkts des Zielpferdes im aktuellen Bild;

S7. Ein Ausgabemodul mittelt alle Geschwindigkeiten des Zielpferdes zwischen zwei aufeinanderfolgenden Bildern, die durch Berechnung erhalten wurden, um eine Durchschnittsgeschwindigkeit des Zielpferdes zu erhalten.

**2.** Verfahren nach Anspruch 1, **dadurch gekennzeichnet, dass** in Schritt S2 die Anzahl der Frames auf 5 Frames festgelegt wird.

**3.** Verfahren nach Anspruch 1, **dadurch gekennzeichnet, dass** in Schritt S2 ein Verfahren verwendet wird, das Farneback verwendet, um das optische Flussfeld zu berechnen.

**4.** Verfahren nach Anspruch 1, **dadurch gekennzeichnet, dass** in Schritt S3 das Modul zur Objekterkennung mit künstlicher Intelligenz ein YOLOv3-Netzwerk verwendet, um die Erkennung der Objekte mit künstlicher Intelligenz zu implementieren.

**5.** Verfahren nach Anspruch 1, **dadurch gekennzeichnet, dass** in Schritt S6 eine Einheitenumrechnung für $H_p$ durchgeführt wird, um die Zielpferdgeschwindigkeit in der Einheit Pferdelänge/Sekunde zu erhalten;

zunächst Berechnen der Zielpferdgeschwindigkeit $H_p$ in der Einheit Pixel pro Sekunde anhand von $H_p$:

$$\dot{H}_p = H_p * fps * N;$$

*fps* ist die Anzahl von Frames pro Sekunde des Videos;

dann Umrechnen der Pixel in eine Pferdelänge und Berechnen der Zielpferdgeschwindigkeit $V_t$ in der Einheit Pferdelänge/Sekunde;

$$V_t = \dot{H}_p/Pixel;$$

$\dot{H}_p$ ist die Geschwindigkeit des Zielpferdes in der Einheit Pixel pro Sekunde; *Pixel* ist die Anzahl der Pixel der Pferdelänge, wobei die Einheit Pixel/Pferdelänge ist.

**6.** Verfahren nach Anspruch 5, **dadurch gekennzeichnet, dass** für eine Länge des Zielpferdes, die vom Modul zur Objekterkennung mit künstlicher Intelligenz erkannt wurde, unter Verwendung eines Verfahrens zur Erkennung abnormaler Zustände RANSAC, um die erkannte Pferdelänge zu überprüfen; wobei angenommen wird, dass das Zielpferd innerhalb eines kurzen Zeitraums nach Beginn des Videos normal läuft, sobald neue Datenpunkte erscheinen, ein neues Regressionsmodell basierend auf diesem Satz von abgetasteten Daten aktualisiert wird; wobei die neuen Datenpunkte anhand des neuen Regressionsmodells sowie anhand hochwertiger Datenpunkte eines bestehenden Regressionsmodells überprüft werden, wobei etwaige abnormale Datenwerte entfernt und durch eine bekannte effektive Länge ersetzt werden.

**7.** Auf Tiefenlernen basierendes Pferdegeschwindigkeitsberechnungssystem, umfassend:

eine Kamera: Die Kamera wird auf einem Wettkampfgelände bereitgestellt und dazu verwendet, vor einem Wettkampf ein Video von einem Zielpferd aufzunehmen, das auf dem Wettkampfgelände umherläuft; während des Aufnahmeprozesses rotiert die Kamera, um das Zielpferd im Aufnahmebereich zu halten;
ein Modul zur Berechnung des optischen Flussfeldes: verwendet, um Bilder aus dem von der Kamera erhaltenen Video zu extrahieren und ein optisches Flussfeld zwischen aufeinanderfolgenden Bildern zu berechnen;
ein Modul zur Objekterkennung mit künstlicher Intelligenz: verwendet, um eine künstliche Intelligenz zu verwenden, um die Position und Größe eines Objekts im Video zu erkennen und zu speichern;
ein Filtermodul für das optische Flussfeld: verwendet, um das vom Modul zur Berechnung des optischen Flussfeldes berechnete optische Flussfeld gemäß einem Erkennungsergebnis des Moduls zur Objekterkennung mit künstlicher Intelligenz zu filtern, um alle sich bewegenden Objekte herauszufiltern, sodass die maximale Komponente des optischen Flussfeldes die Kamerageschwindigkeit in Pixeln pro N Frames ist;
ein Kamerageschwindigkeitsberechnungsmodul: verwendet, um eine Richtung und eine Geschwindigkeit der Kamera unter Verwendung des vom Filtermodul des optischen Flussfeldes gefilterten optischen Flussfeldes zu berechnen;
ein Zielpferdgeschwindigkeitsberechnungsmodul: verwendet, um gemäß der Position des Zielpferdes, die vom Modul zur Objekterkennung mit künstlicher Intelligenz erkannt wurde, eine Verschiebung des Zielpferdes zwischen zwei aufeinanderfolgenden Bildern zu berechnen, indem die Position eines vorherigen Bildes von der Position des Zielpferdes im aktuellen Bild subtrahiert wird, und die Verschiebung des Pferdes zu verwenden, um die Geschwindigkeit der Kamera zwischen zwei aufeinanderfolgenden Bildern, die vom Kamerageschwindigkeitsberechnungsmodul berechnet wurde, einzustellen, um eine Geschwindigkeit $H_p$ des Zielpferdes zu erhalten, wobei eine Einstellformel $H_p = \omega - (\dot{d} - d)$ ist, $\omega$ die Winkelgeschwindigkeit der Kamera ist, die Einheit Pixel/N Frames ist, d die Position des Mittelpunkts des Zielpferdes im vorherigen Bild ist und d die Position des Mittelpunkts des Zielpferdes im aktuellen Bild ist;
wobei ein Ausgabemodul verwendet wird, um alle Geschwindigkeiten des Zielpferdes zwischen zwei aufeinanderfolgenden Bildern zu mitteln, um eine Durchschnittsgeschwindigkeit des Zielpferdes zu erhalten und auszugeben.

## Revendications

**1.** Procédé pour un système de calcul de vitesse d'un cheval basé sur l'apprentissage profond, comprenant les étapes suivantes :

S1. avant un début d'une compétition, les chevaux participant à la compétition marchent autour d'un champ de compétition, une caméra tourne une vidéo d'un cheval cible en train de marcher autour du champ de compétition et transmet la vidéo à un module de calcul de champ de flux optique ; lors d'un tournage vidéo, la caméra entre en rotation pour maintenir le cheval cible au sein d'une plage de tournage ;
S2. réalisation d'une extraction d'image de la vidéo obtenue par la caméra et calcul d'un champ de flux optique entre des images consécutives :
le module de calcul de champ de flux optique décode la vidéo, entrée depuis la caméra, en trames individuelles, et extrait une image à chaque nombre défini de trames N, c'est-à-dire, deux images consécutives sont séparées par N trames, et calcule le champ de flux optique entre deux images consécutives ;
S3. réalisation d'une détection par intelligence artificielle d'objets sur la vidéo :
un module de détection par intelligence artificielle d'objets détecte des objets qui apparaissent dans la vidéo et enregistre une position et une taille de chacun des objets détectés, comprenant une position et une taille du cheval cible ; une position d'un objet est une position de son point central, et une taille comprend une longueur et une largeur ;
S4. un module de filtrage de champ de flux optique élimine par filtrage tous les objets en mouvement du champ de flux optique obtenu à l'étape S2, selon les objets détectés à l'étape S3, de telle sorte qu'une composante maximale du champ de flux optique est la vitesse de caméra en pixels tous les N trames ;
S5. un module de calcul de vitesse de caméra calcule une direction et une vitesse de la caméra selon le champ de flux optique filtré à l'étape S4 ;
S6. calcul d'une vitesse du cheval cible entre deux images consécutives :

selon la position du cheval cible détectée par le module de détection par intelligence artificielle d'objets, un déplacement du cheval cible entre deux images consécutives est calculé en soustrayant une position d'une image précédente d'une position du cheval cible dans une image actuelle, une unité du déplacement est pixel/N trames ; par conséquent, un module de calcul de vitesse de cheval cible calcule la vitesse de caméra finale en pixels/N trames, c'est-à-dire, une vitesse $H_p$ du cheval cible est :

$$H_p = \omega - (\dot{d} - d);$$

$\omega$ est une vitesse angulaire de la caméra, l'unité est pixel/N trames, $\dot{d}$ est une position d'un centre du cheval cible dans l'image précédente, et d est une position d'un centre du cheval cible dans l'image actuelle ;
S7. un module de sortie calcule une moyenne de toutes les vitesses du cheval cible entre deux images consécutives obtenues par calcul pour obtenir une vitesse moyenne du cheval cible.

2. Procédé selon la revendication 1, **caractérisé en ce que**, à l'étape S2, le nombre de trames est défini à 5 trames.

3. Procédé selon la revendication 1, **caractérisé en ce que**, à l'étape S2, un procédé de Farneback est utilisé pour calculer le champ de flux optique.

4. Procédé selon la revendication 1, **caractérisé en ce que**, à l'étape S3, le module de détection par intelligence artificielle d'objets utilise un réseau YOLOv3 pour mettre en œuvre une détection par intelligence artificielle des objets.

5. Procédé selon la revendication 1, **caractérisé en ce que**, à l'étape S6, une conversion d'unité est réalisée sur $H_p$ pour obtenir la vitesse de cheval cible en unité de longueur de cheval/seconde ;

tout d'abord, calcul de la vitesse de cheval cible $H_p$ en unité de pixel par seconde à travers $H_p$ :

$$\dot{H}_p = H_p * fps * N;$$

*fps* est un nombre de trames par seconde de la vidéo ;
ensuite, conversion des pixels en une longueur de cheval et calcul de la vitesse de cheval cible $V_t$ en l'unité de longueur de cheval/seconde ;

$$V_t = \dot{H}_p / Pixels \; ;$$

$\dot{H}_p$ est la vitesse du cheval cible en unité de pixels par seconde ; *Pixels* est le nombre de pixels de la longueur de cheval, l'unité est pixel/longueur de cheval.

6. Procédé selon la revendication 5, **caractérisé en ce que**, pour une longueur du cheval cible détectée par le module de détection par intelligence artificielle d'objets, l'utilisation d'un procédé de détection des états anormaux RANSAC pour vérifier la longueur de cheval détectée ; en supposant que le cheval cible marche normalement au sein d'un court laps de temps après le début de la vidéo, à mesure que de nouveaux points de données apparaissent, un nouveau modèle de régression est mis à jour sur la base de cet ensemble de données échantillonnées ; la comparaison des nouveaux points de données au nouveau modèle de régression, ainsi qu'à des points de données de haute qualité issus d'un modèle de régression existant, de quelconques valeurs de données anormales seront supprimées et remplacées par une longueur effective connue.

7. Système de calcul de vitesse de cheval basé sur l'apprentissage profond, comprenant :

une caméra : la caméra est fournie dans un champ de compétition, et est utilisée pour tourner une vidéo d'un cheval cible en train de marcher autour du champ de compétition avant une compétition ; pendant un processus de tournage, la caméra entre en rotation pour maintenir le cheval cible dans une plage de tournage ;
un module de calcul de champ de flux optique : utilisé pour extraire des images de la vidéo obtenue par la caméra et calculer un champ de flux optique entre des images consécutives ;
un module de détection par intelligence artificielle d'objets : utilisé pour utiliser une intelligence artificielle pour détecter et enregistrer une position et une taille d'un objet dans la vidéo ;
un module de filtrage de champ de flux optique : utilisé pour filtrer le champ de flux optique calculé par le module de calcul de champ de flux optique selon un résultat de détection du module de détection par intelligence artificielle d'objets, pour éliminer par filtrage tous les objets en mouvement, de telle sorte qu'une composante maximale du champ de flux optique est la vitesse de caméra en pixels tous les N trames ;
un module de calcul de vitesse de caméra : utilisé pour calculer une direction et une vitesse de la caméra en utilisant le champ de flux optique filtré par le module de filtrage de champ de flux optique ;
un module de calcul de vitesse de cheval cible : utilisé pour calculer, selon la position du cheval cible détectée par le module de détection par intelligence artificielle d'objets, un déplacement du cheval cible entre deux images consécutives, en soustrayant une position d'une image précédente d'une position du cheval cible dans une image actuelle, et utiliser le déplacement du cheval pour ajuster la vitesse de la caméra entre deux images consécutives calculée par le module de calcul de vitesse de caméra, pour obtenir une vitesse $H_p$ du cheval cible, une formule d'ajustement est $H_p = \omega - (\dot{d} - d)$, $\omega$ est une vitesse angulaire de la caméra, l'unité est pixel/N trames, $\dot{d}$ est une position d'un centre du cheval cible dans l'image précédente, et d est une position d'un centre du cheval cible dans l'image actuelle ;
un module de sortie est utilisé pour calculer une moyenne de toutes les vitesses du cheval cible entre deux images consécutives pour obtenir et sortir une vitesse moyenne du cheval cible.

| | Type | Filters | Size | Output |
|---|---|---|---|---|
| | Convolutional | 32 | 3 × 3 | 256 × 256 |
| | Convolutional | 64 | 3 × 3 / 2 | 128 × 128 |
| 1× | Convolutional | 32 | 1 × 1 | |
| | Convolutional | 64 | 3 × 3 | |
| | Residual | | | 128 × 128 |
| | Convolutional | 128 | 3 × 3 / 2 | 64 × 64 |
| 2× | Convolutional | 64 | 1 × 1 | |
| | Convolutional | 128 | 3 × 3 | |
| | Residual | | | 64 × 64 |
| | Convolutional | 256 | 3 × 3 / 2 | 32 × 32 |
| 8× | Convolutional | 128 | 1 × 1 | |
| | Convolutional | 256 | 3 × 3 | |
| | Residual | | | 32 × 32 |
| | Convolutional | 512 | 3 × 3 / 2 | 16 × 16 |
| 8× | Convolutional | 256 | 1 × 1 | |
| | Convolutional | 512 | 3 × 3 | |
| | Residual | | | 16 × 16 |
| | Convolutional | 1024 | 3 × 3 / 2 | 8 × 8 |
| 4× | Convolutional | 512 | 1 × 1 | |
| | Convolutional | 1024 | 3 × 3 | |
| | Residual | | | 8 × 8 |
| | Avgpool | | Global | |
| | Connected | | 1000 | |
| | Softmax | | | |

FIG. 1

Frequency
Displacement
6000
5000
4000
3000
2000
1000
0
0
25
50
75
100
125
150
175
200

( a )

Frequency
Displacement
5000
4000
3000
2000
1000
0
0
25
50
75
100
125
150
175
200

( b )

FIG. 2

7
(a)
(b)

FIG. 3

VENUE B
Total : 40
Frequency
Error (%)
0
2
4
6
8
10
12
14
16
18
20
19
15
3
2
0
0
0
1
[0, 5]
(5, 10]
(10, 15]
(15, 20]
(20, 25]
(25, 30]
(30, 35]
(35, 40]

FIG. 4

VENUE A
Total : 40
35
30
25
20
15
10
5
0
32
3
4
1
Frequency
[0, 5]
[5, 10]
[10, 15]
[15, 20]
Error (%)

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **LIU KAIZHEN et al.** *A Real-Time Method to Estimate Speed of Object Based on Object Detection and Optical Flow Calculation*, ISSN 1742-6588